# FASCICULE DE BREVET EUROPEEN

(11) **EP 1 564 262 B1**
(45) Date de publication et mention de la délivrance du brevet: **03.06.2015**
(21) Numéro de dépôt: 05290048.7
(22) Date de dépôt: 10.01.2005
(51) Int. Cl.: C04B 41/48

(54) **Produit de protection coloré et liquide pour support**
Gefärbtes, flüssiges Produkt zum Schützen von Substraten
Colored liquid product for protection of substrate

(30) Priorité: 12.02.2004 FR 0401391
(43) Date de publication de la demande: 17.08.2005
(73) Titulaire: Wayser, Alain, 75007 Paris (FR)
(72) Inventeur: Wayser, Alain, 75007 Paris (FR)
(74) Mandataire: Bonnetat, Christian

(56) Documents cités:
- WO-A-02/12405
- FR-A1- 2 639 353
- FR-A1- 2 753 965
- GB-A- 1 135 052
- US-A- 3 844 999
- US-A- 4 812 337
- US-A1- 2003 204 009

## Description

La présente invention concerne un produit liquide, susceptible d'être appliqué à la manière d'une peinture, pour la protection d'un support tel que mur, sol ou toiture, contre les salissures, les graffitis et/ou la pollution.

Par exemple, par le document FR 2 753 965, on connaît déjà des produits de ce type comportant un agent hydrofuge et oléofuge constitué par une dispersion d'un copolymère acrylique fluoré, un liant synthétique, un agent de coalescence et un agent réglant la pénétration du produit liquide dans ledit support. Cependant, ces produits connus ne présentent généralement pas, à la fois, de bonnes propriétés hydrofuge et oléofuge et, par ailleurs, ils ne peuvent pas être colorés. En effet, si on ajoute des pigments colorés à ces produits connus, on se heurte à des difficultés d'homogénéité et de tenue sur le support.

La présente invention a pour objet de remédier à ces inconvénients.

À cette fin, selon l'invention, le produit de protection liquide pour support, tel que mur, sol ou toiture, présentant des propriétés hydrofuge et oléofuge lui permettant de protéger ledit support contre les salissures, les graffitis et la pollution, est remarquable en ce que, pour 1 kg, il comprend :
- de 1 à 10 g de pigments, organiques ou non, tensioactifs non ioniques ;
- de 1 à 100 g de dioxyde de titane en phase aqueuse ;
- de 3 à 6 g d'éther d'alcool 2,2,4-triméthyl-1,3-pentanediol mono (2-méthylpropanolate) à titre d'agent de coalescence ;
- de 8 à 40 g dudit liant synthétique ;
- de 20 à 40 g dudit agent hydrofuge et oléofuge ;
- de 0,75 g à 5 g dudit agent réglant la pénétration du produit liquide dans le support ; et
- eau pour complément à 1 kg.

Ainsi, dans le produit conforme à la présente invention, ledit éther d'alcool permet l'homogénéisation des pigments dans la composition, alors que le liant synthétique, qui communique au produit de bonnes résistances à l'abrasion et aux rayonnements ultraviolets, permet également aux pigments d'avoir une excellente tenue sur le support. Un tel liant synthétique est de préférence une dispersion de polyuréthane cationique aliphatique ou une pure résine acrylique latex.

Par ailleurs, grâce au dioxyde titane, qui avantageusement présente une granulométrie nanométrique, il est possible, en fonction de la proportion de celui-ci, de communiquer au produit soit un aspect de lazure, soit un aspect de peinture. De préférence, lesdits pigments tensioactifs non ioniques, qui communiquent la couleur au produit, sont également de granulométrie nanométrique.

Dans le produit conforme à la présente invention, les propriétés hydrofuge et oléofuge sont apportées par la dispersion du copolymère acrylique fluoré.

Ainsi, grâce à la présente invention, on obtient un produit hydrofuge et oléofuge coloré laissant respirer le support sur lequel il est appliqué et pouvant présenter des effets de maticité et des effets mouillés. Le produit de l'invention est prêt à l'emploi, facilement applicable en une ou plusieurs couches (avec un intervalle de séchage très court --10 mn-- entre deux couches consécutives) et biodégradable à plus de 98% grâce à sa formulation aqueuse.

Dans le cas où le produit de protection conforme à la présente invention doit être appliqué sur un support poreux, il est avantageux qu'il soit relativement visqueux et, à cet effet, il peut comporter, comme agent réglant la pénétration dudit produit dans le support poreux, de 1 à 5 g d'alcool polyvinylique.

En revanche, lorsque le produit de l'invention est destiné à être appliqué sur un support peu poreux, il doit être liquide et mouillant et, à cet effet, l'agent réglant la pénétration du produit dans le support peu poreux comporte avantageusement de l'éthylèneglycol, perfluoroalcool-substitué.

De préférence, ledit agent réglant la pénétration du produit dans le support comporte, en plus dudit éthylèneglycol, perfluoroalcool-substitué, du dipropylène glycol monoéthyl éther.

Dans ce dernier cas, le produit conforme à l'invention comporte, comme agent réglant la pénétration du produit dans le support peu poreux, de 0,75 g à 2 g d'un mélange aqueux d'éthylèneglycol, perfluoroalcool-substitué et de dipropylène glycol monoéthyl éther, mélange aqueux dans lequel la proportion pondérale de l'éthylèneglycol, perfluoroalcool-substitué est au moins approximativement le double de celle du dipropylène glycol monoéthyl éther.

Afin de lier entre elles les parties minérales et organiques dudit produit, celui-ci peut comporter de plus de 0,5 à 8 g de 3-glycédoxypropylméthyldiéthoxysilane agissant comme agent de fixation.

Par ailleurs, afin d'éviter le bullage du produit à l'application, ledit produit peut de plus comporter de 0,05 à 0,5 g d'un agent antimoussant à base d'émulsion non ionique.

À toutes fins utiles, on notera que :
- le document FR 2 639 353 concerne un produit liquide antisalissure, dont le but est de ne pas modifier l'aspect de la surface sur laquelle il est appliqué ;
- le document US 2003/020 4009 décrit une peinture d'étiquetage comportant un agent de coalescence et du dioxyde de titane ; et
- le document GB 1 135 052 décrit une peinture de protection contre l'humidité.

## Revendications

1. Produit de protection liquide pour support, tel que mur, sol ou toiture, présentant des propriétés hydrofuge et oléofuge lui permettant de protéger ledit support contre les salissures, les graffitis et la pollution, et comportant un agent hydrofuge et oléofuge constitué par une dispersion d'un copolymère acrylique fluoré, un liant synthétique, un agent de coalescence et un agent réglant la pénétration du produit liquide dans ledit support,
**caractérisé en ce que**, pour 1 kg, il comprend :
- de 1 à 10 g de pigments, organiques ou non, tensioactifs non ioniques ;
- de 1 à 100 g de dioxyde de titane en phase aqueuse ;
- de 3 à 6 g d'éther d'alcool 2,2,4-triméthyl-1,3-pentanediol mono (2-méthylpropanolate) à titre d'agent de coalescence ;
- de 8 à 40 g dudit liant synthétique ;
- de 20 à 40 g dudit agent hydrofuge et oléofuge ;
- de 0,75 g à 5 g dudit agent réglant la pénétration du produit liquide dans le support ; et
- eau pour complément à 1 kg.

2. Produit de protection selon la revendication 1, plus particulièrement destiné à être appliqué sur un support poreux,
**caractérisé en ce qu'**il comporte, comme agent réglant la pénétration dudit produit dans le support poreux, de 1 à 5 g d'alcool polyvinylique.

3. Produit de protection selon la revendication 1, plus particulièrement destiné à être appliqué sur un support peu poreux,
**caractérisé en ce que** l'agent réglant la pénétration du produit dans le support peu poreux comporte de l'éthylèneglycol, perfluoroalcool-substitué.

4. Produit de protection selon la revendication 3,
**caractérisé en ce que** ledit agent réglant la pénétration du produit dans le support comporte de plus du dipropylène glycol monoéthyl éther.

5. Produit de protection selon les revendications 3 et 4, **caractérisé en ce qu'**il comporte, comme agent réglant la pénétration du produit dans le support peu poreux, de 0,75 g à 2 g d'un mélange aqueux d'éthylèneglycol, perfluoroalcool-substitué et de dipropylène glycol monoéthyl éther, mélange aqueux dans lequel la proportion pondérale de l'éthylèneglycol, perfluoroalcool-substitué et au moins approximativement le double de celle du dipropylène glycol monoéthyl éther.

6. Produit de protection selon l'une des revendications 1 à 5, **caractérisé en ce que** ledit liant synthétique est une dispersion de polyuréthane cationique aliphatique.

7. Produit de protection selon l'une des revendications 1 à 5, **caractérisé en ce que** ledit liant synthétique est une pure résine acrylique latex.

8. Produit de protection selon l'une des revendications 1 à 7, **caractérisé en ce que** le dioxyde de titane présente une granulométrie nanométrique.

9. Produit de protection selon l'une des revendications 1 à 8, **caractérisé en ce que** lesdits pigments tensioactifs non ioniques présentent une granulométrie nanométrique.

10. Produit de protection selon l'une des revendications 1 à 9, **caractérisé en ce qu'**il comporte de plus de 0,5 à 8 g de 3-glycé doxypropylméthyldiéthoxysilane comme agent de fixation liant les parties minérales et organiques dudit produit.

11. Produit de protection selon l'une des revendications 1 à 10, **caractérisé en ce qu'**il comporte de plus de 0,05 à 0,5 g d'un agent antimoussant à base d'émulsion non ionique permettant d'éviter le bullage dudit produit.

## Patentansprüche

1. Flüssiges Schutzprodukt für Träger, wie Mauer, Boden oder Dach, mit wasserabweisenden und ölabweisenden Eigenschaften, die es ihm ermöglichen, den Träger vor Verschmutzungen, Graffiti und Umweltverschmutzung zu schützen, und mit einem wasserabweisenden und ölabweisenden Mittel, das aus einer Dispersion eines fluorierten Acryl-Copolymers, einem synthetischen Bindemittel, einem Koaleszenzmittel und einem Mittel zur Regelung des Eindringens des flüssigen Produkts in den Träger besteht,
**dadurch gekennzeichnet, dass** es pro 1 kg Folgendes enthält:
- 1 bis 10 g nicht ionische, grenzflächenaktive, organische oder anorganische Pigmente;
- 1 bis 100 g Titandioxid in wässriger Phase;
- 3 bis 6 g Alkoholether von 2,2,4-Trimethyl-1,3-pentandiol-mono-(2-methylpropanolat) als Koaleszenzmittel;
- 8 bis 40 g des synthetischen Bindemittels;
- 20 bis 40 g des wasserabweisenden und ölabweisenden Mittels;
- 0,75 g bis 5 g des Mittels zur Regelung des Eindringens des flüssigen Produkts in den Träger; und
- Wasser ad 1 kg.

2. Schutzprodukt nach Anspruch 1, insbesondere zur Aufbringung auf einen porösen Träger, **dadurch gekennzeichnet, dass** es als Mittel zur Regelung des Eindringens des Produkts in den porösen Träger 1 bis 5 g Polyvinylalkohol enthält.

3. Schutzprodukt nach Anspruch 1, insbesondere zur Aufbringung auf einen geringfügig porösen Träger, **dadurch gekennzeichnet, dass** das Mittel zur Regelung des Eindringens des Produkts in den geringfügig porösen Träger Perfluoralkohol-substituiertes Ethylenglykol enthält.

4. Schutzprodukt nach Anspruch 3, **dadurch gekennzeichnet, dass** das Mittel zur Regelung des Eindringens des Produkts in den Träger des Weiteren Dipropylenglykolmonoethylether enthält.

5. Schutzprodukt nach Anspruch 3 und 4, **dadurch gekennzeichnet, dass** es als Mittel zur Regelung des Eindringens des Produkts in den geringfügig porösen Träger 0,75 g bis 2 g einer wässrigen Mischung aus Perfluoralkoholsubstituiertem Ethylenglykol, und Dipropylenglykolmonoethylether enthält, wobei in dieser wässrigen Mischung der Gewichtsanteil von Perfluoralkoholsubstituiertem Ethylenglykol, und mindestens annähernd das Doppelte des Gewichtsanteils von Dipropylenglykolmonoethylether.

6. Schutzprodukt nach einem der Ansprüche 1 bis 5, **dadurch gekennzeichnet, dass** das synthetische Bindemittel eine aliphatische kationische Polyurethan-Dispersion ist.

7. Schutzprodukt nach einem der Ansprüche 1 bis 5, **dadurch gekennzeichnet, dass** das synthetische Bindemittel ein reines Latexacrylharz ist.

8. Schutzprodukt nach einem der Ansprüche 1 bis 7, **dadurch gekennzeichnet, dass** das Titandioxid eine nanometrische Granulometrie aufweist.

9. Schutzprodukt nach einem der Ansprüche 1 bis 8, **dadurch gekennzeichnet, dass** die nicht ionischen, grenzflächenaktiven Pigmente eine nanometrische Granulometrie aufweisen.

10. Schutzprodukt nach einem der Ansprüche 1 bis 9, **dadurch gekennzeichnet, dass** es des Weiteren 0,5 bis 8 g 3-Glycidoxypropylmethyldimethoxysilan als Fixierungsmittel zur Bindung der mineralischen und organischen Teile des Produkts enthält.

11. Schutzprodukt nach einem der Ansprüche 1 bis 10, **dadurch gekennzeichnet, dass** es des Weiteren 0,05 bis 0,5 g eines Schaumverhüters auf Basis einer nicht ionischen Emulsion zur Vermeidung der Blasenbildung des Produkts enthält.

## Claims

1. Liquid protection product for a substrate, such as a wall, a floor or a roof, having water-repellent and oil-repellent properties which allow it to protect said substrate against soiling, graffiti and pollution, and comprising a water-repellent and oil-repellent agent which is formed by a dispersion of a fluorinated acrylic copolymer, a synthetic binder, a coalescent agent and an agent for regulating the penetration of the liquid product into said substrate, **characterised in that**, per 1 kg, it comprises:
- from 1 to 10 g of organic or inorganic, non-ionic surfactant pigments;
- from 1 to 100 g of titanium dioxide in aqueous phase;
- from 3 to 6 g of alcohol ether 2,2,4-trimethyl-1,3-pentanediol-mono-(2-methylpropanolate) as a coalescent agent;
- from 8 to 40 g of said synthetic binder;
- from 20 to 40 g of said water-repellent and oil-repellent agent;
- from 0.75 to 5 g of said agent for regulating the penetration of said liquid product into the substrate; and
- water ad 1 kg.

2. Protection product according to claim 1, which is more particularly intended to be applied to a porous substrate, **characterised in that** it comprises, as an agent for regulating the penetration of said product into the porous substrate, from 1 to 5 g of polyvinyl alcohol.

3. Protection product according to claim 1, which is more particularly intended to be applied to a substrate having low porosity, **characterised in that** the agent for regulating the penetration of the product into the substrate having low porosity comprises perfluoroalcohol-substituted ethylene glycol.

4. Protection product according to claim 3, **characterised in that** said agent for regulating the penetration of the product into the substrate further comprises dipropylene glycol monoethyl ether.

5. Protection product according to claims 3 and 4, **characterised in that** it comprises, as an agent for regulating the penetration of the product into the substrate having low porosity, from 0.75 g to 2 g of an aqueous mixture of perfluoroalcohol-substituted ethylene glycol, and dipropylene glycol monoethyl ether, in which aqueous mixture the proportion by weight of perfluoroalcohol-substituted ethylene glycol and at least approximately double that of dipropylene glycol monoethyl ether.

6. Protection product according to any of claims 1 to 5, **characterised in that** said synthetic binder is a dispersion of aliphatic cationic polyurethane.

7. Protection product according to any of claims 1 to 5, **characterised in that** said synthetic binder is a pure acrylic latex resin.

8. Protection product according to any of claims 1 to 7, **characterised in that** the titanium dioxide has a nanometric particle-size distribution.

9. Protection product according to any of claims 1 to 8, **characterised in that** said non-ionic surfactant pigments have a nanometric particle-size distribution.

10. Protection product according to any of claims 1 to 9, **characterised in that** it further comprises 0.5 to 8 g of 3-glycidoxypropylmethyldiethoxysilane as a fixing agent for binding the mineral and organic parts of said product.

11. Protection product according to any of claims 1 to 10, **characterised in that** it further comprises 0.05 to 0.5 g of an antifoam agent based on non-ionic emulsion which makes it possible to prevent said product from bubbling.
